# EUROPÄISCHE PATENTSCHRIFT

(11) **EP 1 647 562 B1**
(45) Veröffentlichungstag und Bekanntmachung des Hinweises auf die Patenterteilung: **27.05.2009**
(21) Anmeldenummer: 05021239.8
(22) Anmeldetag: 29.09.2005
(51) Int. Cl.: C08G 18/08, C08G 18/12, C08G 18/70, C09D 175/02, C08J 9/30

(54) **Wässrige Polyurethanzusammensetzungen für Schaumbeschichtungen mit Softfeel-Effekt**
Aqueous polyurethane compositions for soft-feel foam coatings
Compositions aqueuses de polyuréthane pour des revêtements de mousse au toucher doux

(30) Priorität: 12.10.2004 DE 102004049591
(43) Veröffentlichungstag der Anmeldung: 19.04.2006
(73) Patentinhaber: Bayer MaterialScience AG, 51368 Leverkusen (DE)
(72) Erfinder: Pohl, Torsten, Dr., 51377 Leverkusen (DE); Klippert, Uwe, 51399 Burscheid (DE); Münzmay, Thomas, Dr., 41539 Dormagen (DE); Kobor, Frank, Dr., Hongkong (CN)

(56) Entgegenhaltungen:
- EP-A- 1 352 917
- WO-A-02/090413
- DE-A1- 2 264 853
- DE-A1- 4 406 159

## Beschreibung

Die Erfindung betrifft neue wässrige Zubereitungen mit Softfeel-Eigenschaften, durch mechanisches Aufschäumen dieser Zubereitungen erhältliche Schäume sowie Softfeel-Beschichtungen auf Basis der Schäume.

Seit Jahren gehen die Bemühungen zur Gewichtseinsparung im Automobil einher mit vermehrten, Kunststoffeinsatz, auch im Innenbereich. Aufgrund ästhetischer und technischer Anforderungen werden Kunststoffteile im Automobil üblicherweise lackiert, um den Kunststoff vor äußeren Einflüssen, wie Sonnenlicht, chemischer, thermischer und mechanischer Beanspruchung zu schützen, um bestimmte Farbtöne und Farbeffekte zu erzielen, um Fehlstellen der Kunststoffoberfläche zu überdecken oder um der Kunststoffoberfläche einen angenehmen Griff (Haptik) zu verleihen. Um die haptischen Eigenschaften von Kunststoffteilen im Automobilinnenraum zu verbessern werden in den letzten Jahren vermehrt so genannte Softfeel-Lacke eingesetzt. "Softfeel-Effekt" im Sinne der vorliegenden Erfindung bezeichnet ein besonderes Griffempfinden (Haptik) der lackierten Oberfläche. Diese Haptik lässt sich mit Begriffen wie samtig, weich, gummiartig oder warm umschreiben, während sich z.B. die Oberfläche einer lackierten Auto-Karosse oder auch eine unlackierte oder mit einem üblichen Klar- oder Decklack beschichtete Kunststoff-Platte wie z.B. ABS, Makrolon^{®} (Polycarbonat, Bayer AG) oder Plexiglas kalt und glatt anfühlt. Dem Trend folgend Emissionen von Lösemitteln in die Umwelt zu vermeiden, haben sich in den letzten Jahren wässrige Softfeel-Lacke auf Basis der Polyurethanchemie durchgesetzt, wie sie beispielhaft in der DE-A 44 06 159 offenbart werden. Diese Lacke ergeben neben einem ausgezeichneten Softfeel-Effekt auch Beschichtungen mit guter Beständigkeit und Schutzwirkung für das Kunststoffsubstrat.

Inzwischen sind die Anforderungen an den Komfort im PKW-Innenraum weiter gestiegen, so dass der erwünschte Softfeel-Effekt durch vergleichsweise dünnschichtige Lackierungen alleine nicht immer erreicht werden kann. Einen wesentlich besseren Komfort bieten beispielsweise Gelbeschichtungen wie sie z.B. in der DE-A 100 37 157 beschrieben sind. Jedoch ist die Herstellung derartiger Beschichtungen durch deren mehrschichtigen Aufbau aufwendig und daher kostspielig.

In der DE-A 22 64 853 und der DE-A 42 30 997 wird offenbart, wie, ausgehend von wässrigen Polyurethan-Polyharnstoff-Dispersionen, durch Erzeugung eines Schlagschaums und Beschichtung von Substraten zu feinporigen, glatten Beschichtungen gelangt werden kann. Nachteilig an diesen Systemen ist jedoch, dass die so erhältlichen Schaumbeschichtungen nicht ausreichend stabil gegen übliche Lösemittel sind.

Nach der Lehre der DE-A 22 64 853 und der DE-A 42 30 997 kann die Beständigkeit gegen Lösemittel und Chemikalien durch den Zusatz von so genannten Vernetzern erhöht werden, doch zeigte sich, dass diese Vernetzung wegen fehlender Reaktivgruppen im Polyurethan-Polyharnstoff nur bedingt zu einer Verbesserung der Beständigkeit führt und für den Gebrauch beispielsweise im Automobilinnenraum ohne zusätzlichen Deckstrich/Finish nicht ausreicht.

Überraschend wurde nun gefunden, dass spezielle, wässrige, durch mechanisches Aufschäumen (Schlagschaum) erhältliche Zubereitungen zur Herstellung von geschäumten Beschichtungen geeignet sind, die einerseits eine hervorragende Haptik (Softfeel-Effekt) ergeben und sich andererseits durch bessere Kratz- und Lösemittelbeständigkeit, auch ohne zusätzlichen Deckstrich/Finish, gegenüber ungeschäumten Beschichtungen auszeichnen.

Gegenstand der Erfindung sind wässrige Zubereitungen zur Herstellung von Beschichtungen mit Softfeel-Eigenschaften enthaltend,
A) wässrige Dispersionen eines Polyurethan/Polyhamstoff-Harzes,
B) hydroxyfunktionelle, wässrige oder wasserverdünnbare Bindemittel, ausgewählt aus Polyester/Polyurethan-Harzen mit einem mittleren Molekulargewicht (Mn) von 1000 bis 30 000, Polyester-, Polyurethan-, Polyharnstoff/Polyurethan-, Polyacrylat-Harzen und deren Kombinationen,
C) Polyisocyanate, welche gegebenenfalls hydrophil modifiziert sind, sowie
D) Schaumstabilisatoren

Als Komponente A) geeignete wässrige Polyurethan-Polyharnstoff-Dispersionen sind beispielsweise beschrieben in D. Dieterich in Houben-Weyl - Methoden der Organischen Chemie Band E20: Polyurethane, S. 1662 - 1666, S. 1667 - 1670, 1672 - 1680, sowie z.B. in der DE-A 15 95 636, DE-A 25 61 506, DE-A 41 33 572 oder WO-A 02/090413.

Die Komponente A) enthält Bausteine ausgewählt aus den folgenden Gruppen:
a1) Polyester-, Polyesteramid-, Polycarbonat-, Polyacetal- und Polyetherpolyole mit Molekulargewichten von mindestens 300, bevorzugt 500 bis 8000, besonders bevorzugt 800 bis 5000, die mindestens zwei freie Hydroxylgruppen enthalten und zur Reaktion mit Isocyanatgruppen befähigt sind,
a2) Diole des Molekulargewichtsbereichs 62 bis 299,
a3) nichtionisches Hydrophilierungsmittel auf Basis eines Mischpolymerisates aus Ethylenoxid und Propylenoxid,
a4) Di- oder Polyisocyanate,
a5) aliphatische und/oder alicyclische primäre und/oder sekundäre Polyamine
a6) isocyanatreaktive, ionisch oder potentiell ionisch hydrophilierende Verbindungen.

Als Polyolkomponente a1) kommen insbesondere lineare Polyesterdiole oder auch schwach verzweigte Polyesterpolyole in Betracht, wie sie in bekannter Weise aus aliphatischen, cycloaliphatischen und aromatischen Di- oder Polycarbonsäuren bzw. ihren Anhydriden hergestellt werden können. Bevorzugte Bausteine sind z.B. Adipin-, Decandicarbon-, Terephthal-, Isophthal-, o-Phthal-, Tetrahydrophthal-, Hexahydrophthal- sowie Säureanhydride, wie o-Phthalsäureanhydrid oder deren Gemisch und mehrwertigen Alkoholen, wie z.B. Ethandiol, Di-, Tri-; Tetraethylenglykol, 1,2-Propandiol, Di-, Tri-, Tetrapropylenglykol, Butandiol-1,4, Hexandiol-1,6, 2,2-Dimethyl-1,3-propandiol, 1,4-Dimethylolcyclohexan oder deren Gemische, gegebenenfalls unter Mitverwendung höherfunktioneller Polyole, wie Trimethylolpropan oder Glycerin. Als mehrwertige Alkohole zur Herstellung der Polyesterpolyole a1) kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester a1) verwendet werden.

Als Polyolkomponenten kommen auch Homo- oder Mischpolymerisate von Lactonen in Frage, die vorzugsweise durch Anlagerung von Lactonen oder Lactongemischen, wie Butyrolacton, ε-Caprolacton und/oder Methyl-ε-caprolacton an geeignete di- und/oder höherfunktionelle Startermoleküle, wie z.B. niedermolekularen, mehrwertigen Alkohole, erhalten werden. Bevorzugt ist ein Mischpolymerisat aus Hexandiol-1,6, ε-Caprolacton mit Diphenyl- bzw. Dialkylcarbonaten.

Auch Hydroxylgruppen aufweisenden Polycarbonate kommen als Polyolkomponenten a1) in Betracht, z.B. solche, die durch Umsetzung von Diolen wie 1,4-Butandiol und/oder 1,6-Hexandiol mit Diarylcarbonaten, z.B. Diphenylcarbonat, Dialkylcarbonat, wie Dimethylcarbonat oder Phosgen hergestellt werden können, mit einem Molekulargewicht von 800 bis 5 000.

Geeignete Polyolkomponenten a1) sind weiterhin Polyetherpolyole wie z.B. Polytetramethylenglykole, die bevorzugt in Kombination mit den Polycarbonatpolyolen eingesetzt werden.

Gegebenenfalls können auch Diole des Molekulargewichtsbereichs 62 bis 299 als Bausteine eingesetzt werden, was jedoch nicht bevorzugt ist. Bevorzugte Aufbaukomponenten a2) sind 1,2-Ethandiol, 1,4-Butandiol, 1,6-Hexandiol und 2,2-Dimethyl-propandiol-1,3. Besonders bevorzugt sind 1,4-Butandiol und 1,6-Hexandiol.

Es ist gegebenenfalls möglich, dass die Komponente A) eine nichtionische Hydrophilierung aufweist. Dazu werden bevorzugt als Aufbaukomponenten a3) die Mischpolymerisate des Ethylenoxids mit Propylenoxid mit einem Ethylenoxidmassenanteil größer 50 %, besonders bevorzugt von 55 bis 89 % eingesetzt.

Die Herstellung der monofunktionellen, hydrophilen Aufbaukomponenten erfolgt in Analogie zu den in der DE-A 23 14 512 oder DE-A 23 14 513 bzw. in der US-B 3 905 929 oder US-B 3 920 598 beschriebenen Weise durch Alkoxylierung eines monofunktionellen Starters wie z.B. n-Butanol oder N-Methyl-butylamin unter Verwendung von Ethylenoxid und gegebenenfalls einem weiteren Alkylenoxid wie z.B. Propylenoxid.

In einer besonders bevorzugten Ausführungsform werden als Aufbaukomponenten a3) Verbindungen mit einem Molekulargewicht von mindestens 400 Dalton, bevorzugt von mindestens 500 Dalton und besonders bevorzugt von 1200 bis 4500 Dalton eingesetzt.

Als Aufbaukomponenten a4) für die als Komponente A) bevorzugten wässrigen Polyurethan-Polyhamstoff-Dispersionen kommen beliebige organische Verbindungen, die mindestens zwei freie Isocyanatgruppen pro Molekül aufweisen, wie z.B. Diisocyanate X(NCO)₂, wobei X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht, in Frage. Weitere Beispiele von als Diisocyanatkomponente verwendbaren Verbindungen werden z.B. von W. Siefken in Justus Liebigs Annalen der Chemie, 562, S. 75-136, beschrieben.

Beispiele für bevorzugt einzusetzende Diisocyanate sind 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, 1,3- und 1,4-Bis-(2-isocyanato-prop-2-yl)-benzol (TMXDI) oder beliebige Gemische solcher Diisocyanate.

Es ist selbstverständlich auch möglich, die in der Polyurethanchemie an sich bekannten höherfunktionellen Polyisocyanate oder auch an sich bekarinte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

Bevorzugte Aufbaukomponenten a5) sind z.B. 1,2-Ethandiamin, 1-Amino-3,3,5-trimethyl-5-aminomethyl-cyclohexan (Isophorondiamin), Piperazin oder Diethylentriamin sowie Hydrazin oder Hydrazinhydrat.

Die wässrige Polyurethan-Polyhamstoff-Dispersionen A) weisen, bezogen auf Feststoff, einen Gehalt von 1 bis 30, bevorzugt von 1 bis 20, besonders bevorzugt von 2 bis 13,5 mmol anionischer Gruppen pro 100 g Polyurethan-Polyharnstoff-Harz auf. Der Einbau derartiger ionischer Gruppen gelingt in bekannter Weise durch Mitverwendung von Aufbaukomponenten a6), welche neben mindestens einer, bevorzugt zwei isocyanatreaktiven Gruppen wie z.B. Alkohol- oder Aminfunktionen eine anionische oder potentiell anionische Gruppe enthalten. Beispiele für geeignete Aufbaukomponenten a6) sind Dihydroxyalkancarbonsäuren wie Dimethylolpropansäure oder Dimethylolbuttersäure, geeignet sind weiterhin Diole, welche zusätzlich 0,5 bis 2 mol Sulfonsäure- oder Sulfonatgruppen pro Molekül enthalten wie z.B. Polyethersulfonate.

Bevorzugte Verbindungen a6) sind weiterhin z.B. Alkali-Sulfonatgruppen enthaltenden Di- oder Polyamine, besonders bevorzugt sind die Alkalisalze der N-(2-Aminoethyl)-2-aminoethansulfonsäure. Bevorzugt ist das Natriumsalz.

Sofern die Aufbaukomponente a6) als freie Säuren eingesetzt werden, müssen diese vor Überführung der Polymerschmelze in Wasser durch Zugabe geeigneter Neutralisationsmittel in ihre Ionenform überführt werden. Geeignete Neutralisationsmittel sind z.B. tertiäre Amine oder anorganische Basen, das Gegenion ist das Natriumion.

Üblicherweise werden 20 bis 94,5 Gew.-%, bevorzugt 30 bis 80 Gew.-% und besonders bevorzugt 50 bis 76,5 Gew.-% der Komponente a1), 0 bis 30 Gew.-%, bevorzugt 0 bis 15 Gew.-% der Komponente a2), 0 bis 10 Gew.-%, bevorzugt 0,5 bis 6 Gew.-% der Komponente a3), 4,5 bis 50 Gew.-%, bevorzugt 5 bis 30 Gew.-% und besonders bevorzugt 7,5 bis 20 Gew.-% der Komponente a4), 0,5 bis 13 Gew.-%, bevorzugt 1 bis 5 Gew.-% der Komponente a5) und 0,5 bis 8 Gew.-%, bevorzugt 1,5 bis 5,5 Gew.-% der Komponente a6) eingesetzt mit der Vorgabe, dass die Summe der Komponenten 100 Gew.-% ergibt.

Die Herstellung der als Aufbaukomponenten A) geeigneten wässrigen Polyurethan-Polyhamstoff-Dispersion erfolgt bevorzugt nach dem Aceton-Verfahren (D. Dieterich in Houben-Weyl: Methoden der Organischen Chemie, Band E20, S. 1670 -81 (1987)).

Im Aceton-Verfahren erfolgt der Aufbau der in der wässrigen Dispersion A) zugrunde liegenden Polyurethan-Polyharnstoff-Harze in einem mehrstufigen Prozess.

In einer ersten Stufe wird aus den Aufbaukomponenten a1) bis a4) und gegebenenfalls a6) ein Isocyanatgruppen enthaltendes Prepolymer aufgebaut. Die Einsatzmenge der Einzelkomponenten wird dabei so bemessen, dass eine Isocyanatkennzahl von 1,1 bis 3,5, bevorzugt von 1,3 bis 2 resultiert. Der Isocyanatgehalt der Prepolymere liegt zwischen 1,5 und 7,5 %, bevorzugt zwischen 2 und 4,5 % und besonders bevorzugt zwischen 2,5 und 3,5 %. Weiterhin ist bei der Bemessung der Aufbaukomponenten a1) bis a4) und gegebenenfalls a6) darauf zu achten, dass die rechnerisch, zahlenmittlere Funktionalität zwischen 1,80 und 3,50 bevorzugt zwischen 1,95 und 2,25 liegt.

In einer zweiten Stufe wird das in Stufe 1 hergestellt Prepolymer in einem organischen, zumindest teilweise wassermischbaren Lösemittel, welches keine isocyanatreaktiven Gruppen trägt, gelöst. Bevorzugtes Lösemittel ist Aceton. Die Mengen an einzusetzenden Lösemittel sind so zu bemessen, dass ein Feststoffgehalt von 20 bis 80 Gew.-%, bevorzugt von 30 bis 50 Gew.-%, besonders bevorzugt von 35 bis 45 Gew.-% resultiert.

In einer dritten Stufe wird die isocyanathaltige Prepolymerlösung mit Mischungen der aminofunktionellen Aufbaukomponenten a5) und a6), sofern es sich bei den Aufbaukomponenten a6) um aminofunktionelle Verbindungen handelt, unter Kettenverlängerung zum hochmolekularen Polyurethan-Polyharnstoff-Harz umgesetzt. Die Mengen der Aufbaukomponenten werden so bemessen, dass pro Mol Isocyanatgruppen des gelösten Prepolymern 0,3 bis 0,93 Mol, bevorzugt 0,5 bis 0,85 Mol primäre und/oder sekundäre Aminogruppen der Aufbaukomponenten a5) bis a6) resultieren. Die rechnerische, zahlenmittlere Isocyanatfunktionalität des resultierenden Polyurethan-Polyharnstoff-Harzes beträgt zwischen 1,55 und 3,10, bevorzugt zwischen 1,90 und 2,35. Das rechnerische, zahlenmittlere Molekulargewicht (Mn) beträgt zwischen 4500 und 250000, bevorzugt zwischen 10000 und 80000 Dalton.

In einer vierten Stufe wird das hochmolekulare Polyurethan-Polyharnstoff-Harz durch Zugabe von Wasser zur Lösung in Form einer feinteiligen Dispersion ausgefällt.

Gegebenenfalls werden eingebaute, freie Säuregruppen zwischen dem dritten und vierten Schritt neutralisiert.

In einer fünften Stufe wird das organische Lösungsmittel, gegebenenfalls unter vermindertem Druck, ganz oder teilweise abdestilliert. Die Wassermenge wird bei Stufe 4 so bemessen, dass die wässrigen Polyurethan-Polyharnstoff-Dispersion einen Feststoff von 30 bis 70, bevorzugt von 40 bis 65 Gew.-% aufweist.

Als Komponente B) kommen beliebige hydroxyfunktionelle, wässrige oder wasserverdünnbare, ionomere Bindemittel aus den Klassen der Polyester-, Polyurethan-, Polyhamstoff-Polyurethan-, Polyacrylat-Harze bzw. beliebige Kombinationen der vorgenannten Typen wie z.B. Polyurethanpolyacrylat- oder Polyesterpolyacrylat-Pfropfpoymerisate in Frage. Bevorzugt als Komponente B) sind wässrige oder wasserverdünnbare Zubereitungen hydroxyfunktioneller Polyester-Polyurethan-Harze (z.B. DE-A 44 06 159 oder DE-A 41 37 429). Die im Folgenden verwendete Bezeichnung "Polyester-Polyurethane" für Komponente B) umfasst im Sinne der Erfindung alle Polyurethane, welche als Weichsegment eine oder mehrere der als Aufbaukomponenten b1) genannten Polyhydroxylverbindungen enthalten, insbesondere Polyesterpolyole, Polycaprolactonpolyole und Polycarbonatpolyole sowie Mischungen der genannte Polyhydroxylverbindungen.

Gut geeignet sind als Komponenten B) wässrige oder wasserverdünnbare Zubereitungen hydroxyfunktioneller ionomerer Bindemittel, die aus folgenden Aufbaukomponenten hergestellt werden:
b1) mindestens ein hydroxyfunktionelles Polyesterpolyol, Polycarbonatpolyol oder Polycaprolactonpolyol oder deren Mischungen des zahlenmittleren Molekulargewichts Mn von 400 bis 6000,
b2) gegebenenfalls niedermolekulare, zwei oder mehr hydroxyl- und/oder aminogruppenhaltigen Verbindung des Molekulargewichts Mₙ von 62 bis 400,
b3) mindestens eine Verbindung, die mindestens zwei gegenüber Isocyanatgruppen reaktiv Gruppen und mindestens eine zur Anionenbildung befähigte Gruppe aufweist und
b4) Polyisocyanate.

Die als Komponente B) bevorzugten wässrigen oder wasserverdünnbaren Zubereitungen hydroxyfunktioneller Polyester-Polyurethan-Harze können nach den üblichen, im Stand der Technik bekannten Verfahren hergestellt werden. Sie enthalten Carbonsäure- und/oder Sulfonsäuregruppen, bevorzugt Carbonsäuregruppen, die zumindest anteilig neutralisiert sein können, als hydrophile Gruppen.

Als Aufbaukomponente b1) einsetzbare Polyesterpolyole weisen bevorzugt ein Molekulargewicht Mn von 600 bis 3000 auf. Ihre Hydroxylzahl beträgt 22 bis 400, bevorzugt 50 bis 200 und besonders bevorzugt 80 bis 160 mg KOH/g. Sie weisen eine Hydroxylfunktionalität von 1,5 bis 6, bevorzugt von 1,8 bis 3 und besonders bevorzugt von 2 auf.

Gut geeignete Beispiele sind die bekannten Polykondensate aus Di- sowie gegebenenfalls Poly-(Tri-,Tetra-)olen und Di- sowie gegebenenfalls Poly-(Tri-, Tetra-)-carbonsäuren oder Hydroxycarbonsäuren oder Lactonen: Anstelle der freien Polycarbonsäuren können auch die entsprechenden Polycarbonsäureanhydride oder entsprechenden Polycarbonsäureester von niederen Alkoholen zur Herstellung der Polyester verwendet werden. Beispiele für geeignete Diole sind z.B. Ethandiol, Di-, Tri-, Tetraethylenglykol, 1,2-Propandiol, Di-, Tri-, Tetrapropylenglykol, Butandiol-1,4, Hexandiol-1,6, 2,2-Dimethyl-1,3-propandiol, 1,4-Dimethylolcyclohexan oder deren Gemische, gegebenenfalls unter Mitverwendung höherfunktioneller Polyole, wie Trimethylolpropan, Glycerin, oder Pentaerythrit.

Als Dicarbonsäuren kommen beispielsweise in Frage: Phthalsäure, Isophthalsäure, Terephthalsäure, Tetrahydrophthalsäure, Hexahydrophthalsäure, Cyclohexandicarbonsäure Adipinsäure, Glutarsäure, Maleinsäure oder Fumarsäure. Anhydride dieser Säuren sind ebenfalls geeignet, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure anteilig verwendet werden, vorausgesetzt, dass die mittlere Funktionalität des Polyols höher als 2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigem Hydroxyl verwendet werden können, sind beispielsweise Hydroxycapronsäure Hydroxybuttersäure, Hydroxydecansäure, Hydroxystearinsäure und dergleichen. Geeignte Lactone sind ε-caprolacton oder γ-Butyrolacton.

Verbindungen der Aufbaukomponente b1) können zumindest anteilig auch primäre oder sekundäre Aminogruppen als isocyanatreaktive Gruppen enthalten.

Als Aufbaukomponente b1) kommen weiterhin Hydroxylgruppen aufweisende Polycarbonate in Frage mit einem bevorzugten Molekulargewicht Mn 600 bis 3000, die z.B. durch Reaktion von Kohlensäurederivaten, z.B. Diphenylcarbonat, Dimethylcarbonat oder Phosgen mit Polyolen, bevorzugt Diolen erhältlich sind. Als derartige Diole kommen bevorzugt 1,4-Butandiol, 1,6-Hexandiol, 1,8-Octandiol, 2,2-Dimethyl-1,3-propandiol, 1,4-Bishydroxymethylcyclohexan, Bisphenol A oder auch Lacton-modifizierte Diole in Frage. Bevorzugt enthält die Diolkompomponente 40 bis 100 Gew.-% 1,6-Hexandiol oder 1,4-Butandiol, besonders bevorzugt 1,6-Hexandiol und/oder 1,6-Hexandiol-Derivate, vorzugsweise solche, die neben endständigen Hydroxyl-Gruppen Ether- oder Estergruppen aufweisen, z.B. Produkte, die durch Umsetzung von 1 Mol 1,6-Hexandiol mit mindestens 1 Mol, bevorzugt 1 bis 2 Mol Caprolacton oder durch Veretherung von Hexandiol mit sich selbst zum Di- oder Trihexylenglykol erhalten werden. Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, Sorbit, Methylglykosid oder 1,3,4,6-Dianhydrohexite.

Die Aufbaukomponente b2) weist bevorzugt ein Molekulargewicht von 62 bis 200 auf. Sie kann aliphatische, alicyclische oder aromatische Gruppen enthalten. Genannt seien hier beispielsweise die niedermolekularen Polyole mit bis zu etwa 20 Kohlenstoffatomen je Molekül, wie z. B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A (2,2-Bis(4-hydroxyphenyl)propan), hydriertes Bisphenol A (2,2-Bis(4-hydroxycyclohexyl)propan) sowie deren Mischungen, sowie Trimethylolpropan, Glycerin oder Pentaerythrit. Auch Esterdiole wie z.B. δ-Hydroxybutyl-ε-hydroxy-capronsäureester, ω-Hydroxyhexyl-γ-hydroxybuttersäure-ester, Adipinsäure-(β-hydroxyethyl)ester oder Terephthaläurebis(β-hydroxyethyl)-ester können verwendet werden. Di- oder Polyamine sowie Hydrazide können ebenfalls als b2) eingesetzt werden, z.B. Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Als Aufbaukomponente b3) geeignete Verbindungen sind neben den bereits unter a6) genannten Verbindungen Monohydroxycarbonsäuren wie z.B. Hydroxypivalinsäure. Bevorzugte ionische oder potentielle ionische Verbindungen b4) sind solche, die über Carboxy- und/oder Carboxylatgruppen verfügen. Besonders bevorzugte ionische bzw. potentiell ionische Verbindungen b4) sind Dihydroxycarbonsäuren, insbesondere 2,2-Dimethylolessigsäure, 2,2-Dimethylolpropionsäure, 2,2-Dimethylolbuttersäure, 2,2-Dimethylolpentansäure oder Dihydroxybernsteinsäure.

Die unter die Aufbaukomponenten b1) bis b3) fallenden Verbindungen können auch C=C-Doppelbindungen enthalten, die z.B. aus langkettigen aliphatischen Carbonsäuren oder Fettalkoholen stammen können. Eine Funktionalisierung mit olefinischen Doppelbindungen ist beispielsweise auch durch den Einbau allylischer Gruppen oder von Acrylsäure oder Methacrylsäure sowie deren jeweiligen Estern möglich.

Als Aufbaukomponente b4) geeignete Polyisocyanate sind die bereits unter a4) genannten Verbindungen geeignet. Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten b4) sind Polyisocyanate bzw. Polyisocyanatgemische auf Basis von HDI, IPDI und/oder 4,4'-Diisocyanatodicyclohexylmethan.

Die Herstellung der wasserverdünnbaren Polyester-Polyurethane B) erfolgt nach prizipiell bekannten Verfahren. Sie können z.B. so hergestellt werden, dass zunächst ein Isocyanat-funktionelles Präpolymer aus b4) und einer oder mehreren Verbindungen b1) bis b3) hergestellt wird und in einem zweiten Reaktionsschritt durch Reaktion mit einer der Verbindungen b1) bis b3), üblicherweise b2), in nicht-wässrigem Medium ein hydroxyfunktionelles Polyester-Polyurethan-Harz erhalten wird, wie z.B. in der EP-A 0 355 682 , S. 4, Z. 39 - 45 beschrieben. Die Herstellung erfolgt bevorzugt jedoch so, dass das OH- und/oder NH-Gruppen enthaltende hydroxyfunktionelle Polyester-Polyurethan-Harz direkt durch Umsetzung der Komponenten b1) bis b4) in nicht-wässrigem Medium gebildet wird, wie z.B. in der EP-A 0 427 028, S.4, Z. 54 - S. 5, Z.1 beschrieben.

Die Urethanisierungsreaktion kann in Gegenwart von gegenüber Isocyanaten inaktiven Lösemitten durchgeführt. Die Menge dieses Lösungsmittels überschreitet zweckmäßigerweise nicht 30 Gew.% und liegt bevorzugt im Bereich von 0 bis 20 Gew.%, jeweils bezogen auf die Summe aus hydroxyfunktionelle Polyurethan-Harz und Lösemittel.

Die im hydroxyfunktionellen Polyester-Polyurethan-Harz B) via Aufbaukomponente b3) eingebauten Säuregruppen können zumindest anteilig neutralisiert werden. Zur Neutralisation sind insbesondere tertiäre Amine geeignet, z.B. Trialkylamine mit 1 bis 12, bevorzugt 1 bis 6 C-Atomen in jedem Alkylrest. Beispiele hierfür sind Trimethylamin, Triethylamin, Methyldiethylamin, Tripropylamin und Diisopropylethylamin. Die Alkylreste können beispielsweise auch Hydroxyl-gruppen tragen, wie bei den Dialkylmonoalkanol-, Alkyldialkanol- und Trialkanolaminen. Beispiel hierfür ist Dimethylethanolamin, das bevorzugt als Neutralisationsmittel dient. Als Neutralisationsmittel sind gegebenenfalls auch anorganische Basen, wie Ammoniak oder Natrium- bzw. Kaliumhydroxid einsetzbar. Das Neutralisationsmittel wird zumeist im Molverhältnis zu den Säuregruppen des Präpolymers von ca. 0,3:1 bis 1,3:1, bevorzugt von ca. 0,4:1 bis 1:1 eingesetzt.

Die Neutralisation der Carbonsäure-Gruppen kann vor, während oder im Anschluss an die Urethanisierungsreaktion erfolgen. Bevorzugt wird der Neutralisationsschritt im Anschluss an die Urethanisierungsreaktion durchgeführt. Es ist auch möglich, das hydroxyfunktionelle Polyurethan-Harz B) in nicht-neutralisierter Form zur Verfügung zu stellen und die Neutralisation erst bei der Herstellung des wässrigen Beschichtungsmittels, z.B. bei Einarbeiten des Harzes in die im wesentlichen Hydroxylgruppen-freie(n) wässrige Polyurethan-Polyharnstoff-Dispersion(en) A) durchzuführen.

Die hydroxyfunktionellen Polyester-Polyurethan-Harze B) besitzen ein mittleres Molekulargewicht Mₙ von 1000 bis 30 000, bevorzugt 1 500 bis 10 000, eine Säurezahl von 10 bis 80, bevorzugt 15 bis 40 und einen Hydroxylgruppen-Gehalt von 0,5 bis 5 Gew.%, bevorzugt 1,0 bis 3,5 Gew.%. Die hydroxyfunktionellen Polyester-Polyurethan-Harze B) können als wässrige Zubereitungen mit einem Festkörpergehalt von 20 bis 70, bevorzugt von 40 bis 65 Gew.-% oder als wasser-verdünnbare Zubereitung in organischen Lösemitteln mit einem Festkörpergehalt von mindestens 50 Gew.-%, bevorzugt mindestens 70 Gew.- % und besonders bevorzugt von 75 bis 90 Gew.-% eingesetzt werden. Der zu 100 Gew.-% fehlende Rest besteht aus organischen Lösemitteln sowie gegebenenfalls lacküblichen Hilfs- und Zusatzstoffes.

Bevorzugt werden als Komponenten C) Polyisocyanate mit freien Isocyanat-Gruppen eingesetzt. Geeignet sind Polyisocyanate beispielsweise auf Basis von Isophorondiisocyanat, Hexamethylendiisocyanat, 1,4-Diisocyanato-cyclo-hexan, Bis-(4-isocyanatocyclohexan)-methan oder 1,3-Diisocyanatobenzol oder auf Basis von Lackpolyisocyanaten wie Allophanat-, Uretdion-, Biuret- oder Isocyanuratgruppen aufweisenden Polyisocyanaten von 1,6-Diisocyanatohexan, Isophorondiisocyanat oder Bis-(4-iso-cyanatocyclohexan)-methan oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartigen Polyhydroxylverbindungen andererseits.

Bevorzugt als Komponenten C) sind niedrigviskose, hydrophobe oder hydrophilierte Polyisocyanate mit freien Isocyanatgruppen auf Basis aliphatischer, cycloaliphatischer, araliphatischer und/oder aromatischer Isocyanate, besonders bevorzugt sind aliphatische oder cycloaliphatische Isocyanate. Diese Polyisocyanate weisen bei 23°C im Allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden. Wasserlösliche bzw. dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Zur Hydrophilierung der Polyisocyanate C) ist es besonders bevorzugt die Polyisocyanate mit unterschüssigen Mengen an einwertigen, hydrophilen Polyetheralkoholen umzusetzen. Die Herstellung derartiger hydrophilierter Polyisocyanate ist beispielsweise in der EP-A 0 540 985 beschrieben. Ebenfalls besonders bevorzugt sind auch die in der EP-A 959087 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 100 24 624 beschrieben sind. Ebenso möglich ist die Hydrophilierung durch Zusatz handelsüblicher Emulgatoren.

Selbstverständlich ist es auch möglich, die Komponente C) als sogenannte blockierte Polyisocyanate einzusetzen. Die Blockierung der oben genannten Polyisocyanate mit freien Isocyanat-Gruppen erfolgt nach bekanntem Stand der Technik durch Umstzung der Polyisocyanate mit freien Isocyanat-Gruppen mit geeigneten Blockierungsmitteln. Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Zur Erreichung spezieller Effekte kann es auch vorteilhaft sein, flexibilisierte Polyisocyanatkomponenten C) einzusetzen, welche leicht durch Prepolymerisierung der oben genannten Polyisocyanatkomponenten mit bevorzugt di- bis trifunktionellen Polyolkomponenten, besonders bevorzugt difunktionellen Polyolkomponenten wie sie unter Aufbaukomponenten a1) bereits genannt wurden, erhalten werden.

Obwohl die erfindungsgemäßen Komponenten A) und B) im Allgemeinen ausreichend hydrophil sind, so dass die Dispergierbarkeit der Komponente C) gewährleistet ist, kann durch Einsatz von hydrophil modifizierten Polyisocyanaten als Komponente C) vielfach eine Verbesserung der Flottenstabilität und der optischen und haptischen Eigenschaften der Softfeellacke erzielt werden. Von daher ist der Einsatz von hydrophil modifizierten Polyisocyanaten als Komponente C) möglich, dabei sind mit Sulfonatgruppen modifizierte Polyisocyanate, wie sie z.B. in der DE-A 100 24 624 beschrieben werden, bevorzugt. Prinzipiell ist natürlich auch der Einsatz von Mischungen verschiedener Vernetzerharze möglich.

Als Schaumstabilisatoren D) geeignete Tenside werden beispielsweise in von K. Kosswig in K. Kosswig & H. Stache - Die Tenside- Carl Hanser Verlag 1993, Seite 115 - 177 beschrieben. Hiezu gehören z.B. die nichtionischen Tenside. Als nichtionische Tenside eignen sich Umsetzungsprodukte von aliphatischen, araliphatischen, cycloaliphatischen oder aromatischen Carbonsäuren, Alkoholen, Phenolderivaten bzw. Aminen mit Epoxiden, wie z.B. Ethylenoxid. Beispiele dafür sind Umsetzungsprodukte von Ethylenoxid mit Carbonsäuren des Rizinusöls, der Abietinsäure, der Laurin-, Myristin-, Palmitin-, Margarin-, Stearin-, Arachin-, Behen-, Lignocerinsäure oder ungesättigte Monocarbonsäuren wie Öl-, Linol-, Linolen-, Ricinolsäure oder aromatischen Monocarbonsäuren wie Benzoesäure, mit Fettsäurealkanolamiden, mit längerkettigen Alkoholen wie Oleylalkohol, Laurylalkohol, Stearylalkohol, mit Phenolderivaten wie z.B. substituierten Benzyl-, Phenylphenolen, Nonylphenolen, Fettsäure und mit längerkettigen Aminen wie z.B. Dodecylamin und Stearylamin, mit Fettsäureglyzeriden oder mit Sorbitanestern. Bei den Umsetzungsprodukten mit Ethylenoxid handelt es sich um Oligo- bzw. Polyether mit Polymerisationsgraden zwischen 2 und 100, bevorzugt zwischen 5 und 50. Die Ethoxylierungsprodukte von Sorbitanestern der Laurin-, Myristin-, Palmitin-, Margarin-, Stearin-, Arachin-, Behen-, Lignocerinsäure oder ungesättigte Monocarbonsäuren wie Öl-, Linol-, Linolen-, Ricinolsäure oder aromatischen Monocarbonsäuren wie Benzoesäure sind besonders bevorzugt.

Als weitere, geeignete schaumstabilisierende Tenside seien genannt Fettsäureamide, Aminoxide und kationische Tenside wie beispielsweise Tetraalkylammonium- und Imidaoliniumsalze. Gegebenenfalls können Tenside mit hydrophoben Resten, welche keine Kohlenwasserstoffe im weiteren Sinne sind Verwendung finden wie z.B. Fluor- oder Silikontenside.

Bevorzugte Tenside sind anionische Tenside wie Carboxylatgruppen- tragende Tenside wie sie durch Verseifen von natürlichen Fetten und Ölen erhältlich sind (Seifen), beispielsweise solche, worin der lipophile Rest 7 bis 23 Kohlenstoffatome enthält, sulfierte Fette und Öle, Aryl- und Alkylsulfonate mit 8 bis 24 Kohlenstoffatomen wie Dodecyl-, Tetradecylsulfonat, Alkylethersulfonate, Alkylbenzolsulfonate, Alkylphosphate und Alkyletherphosphate. Die genannten anionischen Tenside kommen bevorzugt in Form ihrer Alkali- und Ammonium-Salze zum Einsatz.

Besonders bevorzugt sind die anionischen Tenside auf Basis von Ammoniumstearat oder Succinamat (Stokal^{®} STA oder SR, BGB Stockhausen, Krefeld/D).

Nach Anwendungsbereich können die erfindungsgemäßen Zubereitungen weitere Additive wie Verdicker, Verlaufshilfsmittel, Mattierungsmittel, Füllstoffe, organische und anorganische Pigmente, Griffmittel, Stabilisatoren wie Hydrolysestabilisatoren, UV-Stabilisatoren und Absorber, Antioxidanzien; Stabilisatoren gegen mikrobiellen Abbau enthalten.

Gegenstand der vorliegenden Erfindung sind Softfeel-Schäume enthaltend die erfindungsgemäßen wässrigen Zubereitungen.

Die erfindungsgemäßen Schäume werden zweckmäßig durch maschinelles Verschäumen der Komponenten (A) bis (D) hergestellt:

Die zu verschäumende Zusammensetzung kann vorteilhaft durch einfaches Mischen der jeweiligen Komponenten hergestellt werden, wobei die jeweiligen Komponenten vorzugsweise direkt in wässriger Form eingesetzt werden, wie sie aus der Herstellung und/oder Formulierung entstehen, und nach dem Vermischen der Substanzen kann der Wassergehalt erforderlichenfalls korrigiert werden. Der Schaumstabilisator (D) wird zweckmäßig in einer wirksamen Menge eingesetzt, welche so zu wählen ist, dass in der gewünschten Zeit und bei der gewünschten Schaumfeinheit und -festigkeit die gewünschte Stabilität erreicht wird.

Das Verschäumen der Komponenten kann in handelsüblichen, geeigneten Schaumschlägern erfolgen, zweckmäßig in einem solchen, der so konstruiert ist und betrieben wird, dass eine möglichst dichte, gleichmäßige und feine Wirbelbildung beim Mischen stattfindet und folglich eine entsprechend feine Verteilung der Luft erfolgt und die gewünschte Schaumfeinheit erzielt wird. Dies gelingt schon mittels einfachster technischer Mittel, wie beispielsweise schnell laufender Rührwerke analog einem Haushaltsgerät zur Erzeugung von Schlagsahne. Ein möglichst geringer Druckabfall beim Austritt aus dem Schaumschläger begünstigt die Feinheit des Schaumes.

Die erfindungsgemäßen Schäume weisen bei 20°C und Normaldruck vorteilhaft ein Litergewicht im Bereich von 400-700 g, bevorzugt im Bereich von 500 bis 600 g auf.

Die erfindungsgemäßen Schäume weisen vorteilhaft eine Schaumzellengröße auf, die im wesentlichen kleiner ist als 500 µm und beispielsweise im Bereich von 0,1 bis 200 µm, besonders 0,2 bis 100 µm liegt, wobei gelegentlich einzelne Schaumbläschen durch Zusammenfließen auch größer sein können, z.B. im Bereich von 200 bis 1 000 µm oder auch nur 100 bis 500 µm.

Die erfindungsgemäßen Schäume sind derart beständig, dass sie auch nach mehrstündigem Zwischenlagern ihre Schaumstruktur im wesentlichen beibehalten und sind auch - gegebenenfalls unter geringem Überdruck (beispielsweise ≤ 0,1 bar, z.B. 0,1 bis 1 bar) - einwandfrei gießbar. Geeignete Schäume weisen z.B. eine dynamische Viskosität auf.

Zur Verschäumung der wässrigen Präparate zu den erfindungsgemäßen Schäumen eignen sich besonders Mischer, die fähig sind, einen entsprechend feinen Schaum zu erzeugen, insbesondere Coaxiale Rotor/Stator-Mischer, in welchen der mit dem Rotor verbundene zylinderförmige innere Teil des Mischerkopfes ("Quirl") mit radial fest angebrachten (vorzugsweise kantigen) Stiften an der Zylinderwand besetzt ist, und der mit dem Stator verbundene zylinderförmige Teil des Mischerkopfes (Behälter) ebenfalls mit radial fest angebrachten (vorzugsweise kantigen) Stiften an der Innenwand besetzt ist, so dass beim Betrieb des Mischers die Rotorstifte in den Statorstiften kämmen und unter Zuspeisung der Komponenten und Luft an einem Ende des Mischerkopfes, im Mischerkopf eine wirksame Verschäumung erfolgt und am anderen Ende des Mischerkopfes ein im wesentlichen nicht expandierter Schaum austritt. Durch die Wahl der Länge, Dichte und Form der Stifte - im Zusammenhang mit der vorgesehenen Drehgeschwindigkeit, dem Volumen des Mischers, der Zuspeisegeschwindigkeit des wässrigen Präparates und dem Druck der zugespeisten Luft, kann eine optimale Feinverschäumung der Präparate zu stabilen, spritzbeständigen Schäumen erfolgen. Durch geeignete Wahl der Parameter im Zusammenhang mit der Wahl der Komponenten kann unter minimalem Luftüberdruck ein optimaler Schaum erzeugt werden, z.B. bei einem Überdruck bis 5 bar, bevorzugt im Bereich von 0,1 bis 1,5, besonders bevorzugt 0,2 bis 0,9 bar.

Die erfindungsgemäßen wässrigen Schäume eignen sich zur Herstellung von Softfeel-Beschichtungen. Als Substrate für die Beschichtungen eignen sich im Allgemeinen beliebige übliche, harte oder dehnbare und/oder flexible Substrate. Als harte Substrate können z.B. Stein und steinähnliche Materialien, Metall, Holz erwähnt werden. Als flexible und/oder schlagzähe, dehnbare Substrate können z.B. thermoplastische und/oder duroplastische Kunststoffe wie im Autoinnenraum oder in Industrieanwendungen verwendet werden. Da die erfindungsgemäßen Schäume Beschichtungen mit einer besonders ausgeprägten Dehnbarkeit und Biegsamkeit und einem besonders ausgeprägten Rückstellvermögen geben können, sind sie für Beschichtungen auf flexiblen und/oder dehnbaren Substraten besonders gut geeignet und daher dafür auch besonders bevorzugt. Bevorzugt sind sie vor allem für Substrate, an die besonders hohe Anforderungen im Bezug auf Flexibilität, Dehnbarkeit und Rückstellvermögen gestellt werden, z.B. Kunstleder und oben genannte Kunststoffe.

Die Applikation kann auf sehr einfache Weise unter Verwendung von an sich für das Auftragen von Schaum üblichen Applikationsmethoden erfolgen z.B. durch Rakeln oder Beschichten mit einer Walze oder vornehmlich durch Spritzen mit geeigneten an sich üblichen Spritzpistolen, z.B. mit solchen ohne oder mit Luftzufuhr, z.B. mit sogenannten Airless oder Air-mix Spritzpistolen oder vorzugsweise mit Niederdruckpistolen (sogenannten HVLP - High Volume Low Pressure - Pistolen). Hierzu sei bemerkt, dass in den Spritzpistolen mit Luftzufuhr die Luft im wesentlichen nur zur Schaumbeförderung dient, und es ist überraschend, dass bei der Schaumbeförderung in Spritzpistolen sowohl mit als auch ohne Luftzufuhr (besonders solchen der genannten Art) die Schaumstruktur von beim Spritzen insoweit erhalten bleibt, als er in Form von gleichartigem Schaum auf das Substrat aufgetragen wird und darauf als Schaum fixiert werden kann. Besonders geeignet ist die Applikation durch Spritzen oder mit einem Rollrakel ("roller coater"). Ferner kann der Schaum auch durch Gießen und Tauchen auf die Substrate aufgebracht werden. In einer weiteren Ausführungsvariante kann die Schaumbeschichtung auch auf strukturierte Papiere bzw. Trennpapiere und anschließend auf Substrate aufgebracht werden. Ferner ist der hier beschrieben Softfeel-Schaum auch nach dem In-Mould-Coating-Verfahren applizierbar. In diesem Fall kann eine Narbung der Oberfläche über die Werkzeuginnenseite erreicht werden

Die Schaumbeschichtung kann auch auf Folien aufgebracht und schadensfrei ohne Haftungsverlust, Weißbruch und optischer oder haptischer Veränderung in einem Tiefziehprozess dreidimensional verformt werden.

Die erfindungsgemäße feinporige Schaumbeschichtung zeichnet sich aufgrund ihres elastischen Rückstellvermögens durch eine hohe Energieabsorptionswirkung aus. Hierduch wirkt diese schall- und stoßdämpfend.

Die erfindungsgemäßen Softfeel-Schäume können als 1-schichtig pigmentierte oder transparente Beschichtungen aufgebracht werden. Ferner können auch mehrschichtige Aufbauten zur Erzielung verbesserter optischer und haptischer Effekte dargestellt werden.

Die erfindungsgemäßen Schäume werden vorteilhaft in solchen Mengen aufgetragen, dass die Auftragsmenge bezogen auf Lacksysteme 20 bis 120 g/m², vorzugsweise 30 bis 50 g/m² entspricht. Auf den Schaum bezogen liegt die Auftragsmenge, vorteilhaft im Bereich von 50 bis 300, bevorzugt 80 bis 250 g/m².

Die mit dem erfindungsgemäßen Schaum ausgerüsteten Substrate, können auf an sich übliche Weise getrocknet werden - zweckmäßig im Trockenschrank oder Trockenkanal.

### Beispiele

Soweit nicht abweichend angegeben beziehen sich alle Prozentangaben auf Gewichtsprozent.

Viskositätsmessungen wurden mit einem Kegel-Platte-Viskosimeter Physica Viscolab LC3 ISO der Firma Physica, Stuttgart, Deutschland nach DIN 53019 bei einem Schergefälle von 40 s⁻¹ durchgeführt.

Die Bestimmung der mittleren Teilchengröße erfolgte mittels Laser-Korrelations-Spektroskopie (Zetasizer^{®} 1000, Malvern Instruments, Herrenberg, Deutschland.

Die angegebenen OH-Zahlen wurden ausgehend von den eingesetzten Monomeren berechnet.

Säurezahlen: Bestimmungsmethode, DIN ISO 3682.

### Verwendete Substanzen und Abkürzungen:

- BYK 348:: Benetzungsmittel (BYK-Chemie, Wesel, DE)
- Tego-Wet^{®} KL 245:: Verlaufsadditiv, 50 %ig in Wasser (Tegochemie, Essen, DE)
- Aquacer^{®} 535:: Wachsemulsion (BYK-Chemie, Wesel, DE)
- Sillitin^{®} Z 86:: Füllstoff (Hoffmann & Söhne, Neuburg, DE)
- Pergopak^{®} M 3: Füllstoff,: Mattierungsmittel (Martinswerk, Bergheim, DE)
- Talkum^{®} IT extra:: Mattierungsmittel (Norwegian Talc, Frankfurt, DE)
- Bayferrox^{®} 318 M:: Farbpigment (schwarz) (Bayer AG, Leverkusen, DE)
- OK 412:: Mattierungsmittel (Degussa, Frankfurt, DE)
- Bayderm^{®} Additiv VL: Verdickungs- und Verlaufsmittel, Zubereitung auf Basis modifizierter Urethane und Wachse (Lanxess AG, Leverkusen, DE)
- Stokal^{®} STA: Schaumhilfsmittel, Ammoniumstearat, anionisch (BGB Stockhausen, Krefeld, DE)
- Stokal^{®} SR: Schaumhilfsmittel, Succinamat, anionisch (BGB Stockhausen, Krefeld, DE)

### Komponente A)

### Beispiel 1: Bayhydrol^{®} PR 240 (Bayer AG, Leverkusen/D):

Polyurethan-Polyhamstoffdispersion mit einem Feststoffgehalt von 40 Gew.-%

### Beispiel 2: Bayhydrol^{®} LP RSC 1187 (Bayer AG, Leverkusen/D):

Polyurethan-Polyharnstoffdispersion mit einem Feststoffgehalt von 50 Gew.-%

### Komponente B)

### Beispiel 3: Bayhydrol^{®} XP 2429 (Bayer AG, Leverkusen/D):

Hydroxyfunktionelle Polyester-Polyurethan-Dispersion mit einem Feststoffgehalt von 55 Gew.-% in Wasser/NMP und einem Hydroxylgruppengehalt von 0,8 Gew.-%

### Komponente C) (PIC)

### Beispiel 4: Bayhydur^{®} 3100 (Bayer AG, Leverkusen/D):

Hydrophiles, aliphatisches Polyisocyanat auf Basis Hexamethylendiisocyanat

### Beispiel 5: Herstellung von Schaumbeschichtungen mit Softfeel-Effekt

Die Bindemittel (Komponente A und B) werden mit Wasser, Additiven, Pigmenten, Füllstoffen und Mattierungsmitteln vordispergiert und mittels einer Perlmühle angerieben. Nach 20 - 40 Min. wird der resultierende Stammlack filtriert und mit Mattierungsmittel durch nachträgliches Dispergieren der Glanzgrad eingestellt. Die Viskosität wird je nach Applikationsweise auf 25 bis 90 s Auslaufzeit durch Wasserzugabe eingestellt (DIN-4 Becher, AFAM 2008 / 10503).

Dem Stammlack werden dann unter Rühren die Schäumungs- und Rheologieadditive sowie Komponente C zugegeben.

Dieses Lacksystem wird mit einem Rührgerät/ Dissolver (z.B. Krups Dreimix mit Schneebesen) oder mit einem Schaumherstellungsgerät (Micromix) solange aufgerührt/aufgeschäumt bis die gewünschte Schaumdichte erreicht ist.

Die Applikation erfolgt innerhalb einer Verarbeitungszeit von bis zu 2 h
- durch Spritzauftrag mit Becherpistole bei 1,5 bis 4 bar Spritzdruck und 1 bis 3 mm Düsendurchmesser, Filmschichtdicke 50 µm bis 300 µm, vorzugsweise 80 µm bis 250 µm oder
- durch Aufrakeln 50 µm bis 1000 µm, vorzugsweise 100 µm bis 500 µm oder
- durch Gießen 500 µm bis 5000 µm, vorzugsweise 750 µm bis 3000 µm Trocknung der Beschichtung erfolgt nach 10 Min-Ablüftung bei Raumtemperatur bei 80°C für 30 Minuten.

| Beispiel 5 | | | | | | | |
|---|---|---|---|---|---|---|---|
| **Komponente I** | | A | B | C | D | E | F |
| | | **Gew.-Tle.** | **Gew.-Tle.** | **Gew.-Tle.** | **Gew.-Tle.** | **Gew.-Tle.** | **Gew.-Tle.** |
| Beispiel 3: Bayhydrol^{®} XP 2429 | | 22,9 | 24,8 | 24,3 | 23,7 | 22,7 | 21,7 |
| Beispiel 2: Bayhydrol^{®} LP RSC 1187 | | 50,4 | 54,5 | 53,4 | 52,1 | 49,8 | 47,6 |
| BYK^{®} 348, Lff. | (1) | 0,97 | 0,7 | 0,7 | 0,7 | 0,7 | 0,7 |
| Tego-Wet^{®} KL 245, 50 %ig in H₂O | (2) | 0,5 | 0,4 | 0,4 | 0,4 | 0,5 | 0,5 |
| Aquacer^{®} 535, Lff. | (3) | 0,6 | 0,6 | 0,6 | 0,6 | 0,6 | 0,6 |
| Sillitin^{®} Z 86 | (4) | 1,5 | 1,4 | 1,4 | 1,5 | 1,4 | 1,5 |
| Pergopak^{®} M 3 | (5) | 2,2 | 2,2 | 2,1 | 2,1 | 2,2 | 2,2 |
| | | | | | | | |
| Talkum^{®} IT extra | (6) | 0,7 | 0,8 | 0,7 | 0,7 | 0,7 | 0,7 |
| Bayferrox^{®} 318 M | | 5,8 | 5,7 | 5,7 | 5,8 | 5,9 | 6,0 |
| Mattierungsmittel^{®} OK 412 | (7) | 0,6 | 0,6 | 0,6 | 0,6 | 0,6 | 0,6 |
| Stokal^{®} SR | (8) | 2,0 | 2,0 | 2,0 | 2,0 | 2,0 | 2,1 |
| Stokal^{®} STA | (8) | 0,7 | 0,7 | 0,7 | 0,7 | 0,7 | 0,7 |
| Bayderm^{®} Additiv VL | | 1,9 | 1,8 | 1,9 | 1,9 | 1,9 | 1,9 |
| | | | | | | | |

| **Komponente II*** | | | | | | | |
|---|---|---|---|---|---|---|---|
| Beispiel 4: Bayhydur^{®} 3100, 75 %ig inl-Methoxy-2-Propylacetat (MPA) | | 9,5 100,0 | 3,8 100,0 | 5,5 100,0 | 7,2 100,0 | 10,3 100,0 | 13,2 100,0 |

| Lacktechnische Daten | | | | | | | |
|---|---|---|---|---|---|---|---|
| NCO/OH | | 2,7 | 1,0 | 1,5 | 2,0 | 3,0 | 4,0 |
| Standzeit | | 60 min. | 60 min. | 60 min. | 60 min. | 60 min. | 60 min. |
| | | | | | | | |

| **Eigenschaften Soft Feel Schaumbeschichtung** | | | | | | | |
|---|---|---|---|---|---|---|---|
| Schaumdichte in g/ml | | 1,3-2,1 | 1,3-2,1 | 1,3-2,1 | 1,3-2,1 | 1,3-2,1 | 1,3-2,1 |
| Schichtdicke in µm | | 60-130 | 60-130 | 60-130 | 60-130 | 60-130 | 60-130 |
| Mikrohärte / Rückfederung in % | | 74 | 78 | 76 | 75 | 70 | 66 |
| Mikrometer /max. Eindringtiefe in µm | | 13 | 15 | 14 | 14 | 12 | 12 |
| Pendelhärteprüfung nach König in s | | 35 | 30 | 32 | 34 | 39 | 40 |
| Lösemittelbeständigkeit (1 min. stät. Einwirkung) | | | | | | | |
| SB / MPA / Xylol / EtAc / EtOH / H2O (Durchschnitt) | | 8 | 9 | 8 | 8 | 8 | 7 |
| Sun Tan Lotion Resistance nach 1h bei 74°C | | 3 | 3-4 | 3-4 | 3-4 | 3 | 3 |

| | | | | | | | |
|---|---|---|---|---|---|---|---|
| * Bayhydur^{®} 3100 wird mit MPA vorverdünnt und dann mit Komponente I verrührt. | | | | | | | |

## Patentansprüche

1. Wässrige Zubereitung zur Herstellung von Beschichtungen mit Softfeel-Eigenschaften enthaltend
A) wässrige Dispersionen eines Polyurethan/Polyharnstoff-Harzes,
B) hydroxyfunktionelle, wässrige oder wasserverdünnbare Bindemittel, ausgewählt aus Polyester-Polyurethan-Harzen mit einem mittleren Molekulargewicht (Mn) von 1000 bis 30 000, Polyester-, Polyacrylat-Harzen und deren Kombinationen,
C) Polyisocyanate, welche gegebenenfalls hydrophil modifiziert sind, sowie
D) Schaumstabilisatoren.

2. Wässrige Zubereitungen gemäß Anspruch 1, **dadurch gekennzeichnet, dass** die komponente A) Bausteine ausgewählt aus den folgenden Gruppen enthält:
a1) Polyester-, Polyesteramid-, Polycarbonat-, Polyacetal- und Polyetherpolyole mit Molekulargewichten von mindestens 300, die mindestens zwei freie Hydroxylgruppen enthalten und zur Reaktion mit Isocyanatgruppen befähigt sind,
a2) Diole des Molekulargewichtsbereichs 62 bis 299,
a3) nichtionisches Hydrophilierungsmittel auf Basis eines Mischpolymerisates aus Ethylenoxid und Propylenoxid,
a4) Di- oder Polyisocyanate,
a5) aliphatische und/oder alicyclische primäre und/oder sekundäre Polyamine,
a6) isocyanatreaktive, ionisch oder potentiell ionisch hydrophilierende Verbindungen.

3. Wässrige Zubereitungen gemäß Anspruch 2, **dadurch gekennzeichnet, dass** die Polyolkomponente a1) eine Kombination aus Polytetramethylenglykolen und Polycarbonatpolyolen ist.

4. Wässrige Zubereitungen gemäß Anspruch 1, **dadurch gekennzeichnet, dass** die wässrige Polyurethan-Polyhamstoff-Dispersion A) einen Gehalt von 1 bis 30 mmol anionischer Gruppen pro 100 g Polyurethan-Polyharnstoff-Harz aufweist.

5. Wässrige Zubereitungen gemäß Anspruch 4, **dadurch gekennzeichnet, dass** die Komponente B) Carbonsäuregruppen als hydrophile Gruppen enthält.

6. Wässrige Zubereitungen gemäß Anspruch 1, **dadurch gekennzeichnet, dass** die Komponente B) ein mittleres Molekulargewicht Mₙ von 1000 bis 30 000, eine Säurezahl von 10 bis 80 und ein Hydroxylgruppen-Gehalt von 0,5 bis 5 Gew.% aufweist.

7. Wässrige Zubereitungen gemäß Anspruch 1, **dadurch gekennzeichnet, dass** die Komponente C) ein polyetherhydrophiliertes Polyisocyanat ist.

8. Wässrige Zubereitungen nach Anspruch 1, **dadurch gekennzeichnet, dass** die Komponente D) ein anionisches Tensid ist.

9. Softfeel-Schaum, erhältlich aus den wässrigen Zubereitungen gemäß Anspruch 1.

10. Verfahren zur Herstellung des Softfeel-Schaums gemäß Anspruch 9, **dadurch gekennzeichnet, dass** die Komponenten A) bis D) mittels mechanischen Mischers verschäumt werden.

11. Verwendung des Softfeel-Schaums gemäß Anspruch 9 zur Herstellung von Beschichtungen für den Autoinnenraum.

12. Softfeel-Beschichtungen bestehend aus Softfeel-Schaum gemäß Anspruch 9 und Substrat.

13. Softfeel-Beschichtung gemäß Anspruch 12, **dadurch gekennzeichnet, dass** das Substrat ein flexibles und/oder dehnbares Substrat aus thermoplastischen und/oder duroplastischen Kunststoffen ist.

14. Softfeel-Beschichtung nach Anspruch 12 oder 14, **dadurch gekennzeichnet, dass** sie durch Sprühen appliziert ist.

## Claims

1. Aqueous preparation for producing coatings having soft-feel properties, comprising
A) aqueous dispersions of a polyurethane/polyurea resin,
B) hydroxy-functional, aqueous or water-dilutable binders, selected from polyester-polyurethane resins having an average molecular weight (Mₙ) of 1000 to 30 000, polyester-polyacrylate resins and combinations thereof,
C) polyisocyanates, which may have been hydrophilically modified, and
D) foam stabilizers.

2. Aqueous preparations according to Claim 1, **characterized in that** component A) comprises units selected from the following groups:
a1) polyester, polyesteramide, polycarbonate, polyacetal and polyether polyols having molecular weights of at least 300, which contain at least two free hydroxyl groups and are capable of reaction with isocyanate groups,
a2) diols of the molecular weight range 62 to 299,
a3) nonionic hydrophilicizer based on a copolymer of ethylene oxide and propylene oxide,
a4) di- or polyisocyanates,
a5) aliphatic and/or alicyclic primary and/or secondary polyamines,
a6) isocyanate-reactive, ionically or potentially ionically hydrophilicizing compounds.

3. Aqueous preparations according to Claim 2, **characterized in that** the polyol component a1) is a combination of polytetramethylene glycols and polycarbonate polyols.

4. Aqueous preparations according to Claim 1, **characterized in that** the aqueous polyurethanepolyurea dispersion A) has an anionic groups content of 1 to 30 mmol per 100 g of polyurethanepolyurea resin.

5. Aqueous preparations according to Claim 4, **characterized in that** component B) contains carboxylic acid groups as hydrophilic groups.

6. Aqueous preparations according to Claim 1, **characterized in that** component B) has an average molecular weight Mₙ of 1000 to 30 000, an acid number of 10 to 80 and a hydroxyl group content of 0.5% to 5% by weight.

7. Aqueous preparations according to Claim 1, **characterized in that** component C) is a polyether-hydrophilicized polyisocyanate.

8. Aqueous preparations according to Claim 1, **characterized in that** component D) is an anionic surfactant.

9. Soft-feel foam obtainable from the aqueous preparations according to Claim 1.

10. Process for producing the soft-feel foam according to Claim 9, **characterized in that** components A) to D) are foamed by means of a mechanical mixer.

11. Use of the soft-feel foam according to Claim 9 for producing coatings for the car interior.

12. Soft-feel coatings consisting of soft-feel foam according to Claim 9 and substrate.

13. Soft-feel coating according to Claim 12, **characterized in that** the substrate is a flexible and/or stretchable substrate made of thermoplastic and/or thermoset polymers.

14. Soft-feel coating according to Claim 12 or 13, **characterized in that** it is applied by spraying.

## Revendications

1. Préparation aqueuse pour la fabrication de revêtements au toucher doux, contenant
A) des dispersions aqueuses d'une résine de polyuréthanne/de polyurée,
B) des liants hydroxyfonctionnels, aqueux ou diluables à l'eau, choisis parmi des résines de polyester-polyuréthanne avec un poids moléculaire moyen (Mn) de 1000 à 30 000, des résines de polyester, de polyacrylate, et leurs combinaisons,
C) des polyisocyanates, lesquels sont modifiés le cas échéant dans le sens hydrophile, ainsi que
D) des stabilisateurs de mousse.

2. Préparations aqueuses selon la revendication 1, **caractérisées en ce que** le composant A) contient des éléments choisis parmi les groupes suivants :
a1) des polyols de polyester, de polyester amide, de polycarbonate, de polyacétal et de polyéther avec des poids moléculaires d'au moins 300, qui contiennent au moins deux groupes hydroxyles libre et qui sont capables de réagir avec des groupes isocyanates,
a2) de diols de l'intervalle de poids moléculaires de 62 à 299,
a3) des agents hydrophilants non ioniques à base d'un polymère mixte d'oxyde d'éthylène et d'oxyde de propylène,
a4) des di- ou polyisocyanates,
a5) des polyamines aliphatiques et/ou alicycliques primaires et/ou secondaires,
a6) des composés hydrophilants réagissant aux isocyanates, ioniques ou potentiellement ioniques.

3. Préparations aqueuses selon la revendication 2, **caractérisées en ce que** le composant polyol a1) est une combinaison de polytétraméthylèneglycols et de polycarbonates polyols.

4. Préparations aqueuses selon la revendication 1, **caractérisées en ce que** la dispersion aqueuse de polyuréthanne et de polyurée A) présente une teneur de 1 à 30 mmol de groupes anioniques par 100 g de résine polyuréthanne-polyurée.

5. Préparations aqueuses selon la revendication 4, **caractérisées en ce que** le composant B) contient des groupes acides carboxyliques comme groupes hydrophiles.

6. Préparations aqueuses selon la revendication 1, **caractérisées en ce que** le composant B) présente un poids moléculaire moyen Mₙ de 1000 à 30000, un indice d'acide de 10 à 80 et une teneur en groupes hydroxyles de 0,5 à 5 % en poids.

7. Préparations aqueuses selon la revendication 1, **caractérisées en ce que** le composant C) est un polyisocyanate hydrophilisé par polyéther.

8. Préparations aqueuses selon la revendication 1, **caractérisées en ce que** le composant D) est un tensioactif anionique.

9. Mousse au toucher doux pouvant être obtenue à partir des préparations aqueuses selon la revendication 1.

10. Procédé de production de la mousse au toucher doux selon la revendication 9, **caractérisé en ce qu'**on fait mousser les composants A) à D) au moyen d'un mélangeur mécanique.

11. Utilisation de la mousse au toucher doux selon la revendication 9 à la fabrication de revêtements pour l'intérieur des automobiles.

12. Revêtements au toucher doux consistant en une mousse au toucher doux selon la revendication 9 et en un substrat.

13. Revêtement au toucher doux selon la revendication 12, **caractérisé en ce que** le substrat est un substrat flexible et/ou extensible en matières synthétiques thermoplastiques et/ou thermodurcissables.

14. Revêtement au toucher doux selon la revendication 12 ou 14, **caractérisé en ce qu'**il est appliqué par pulvérisation.
